# EUROPÄISCHE PATENTSCHRIFT

(11) **EP 3 000 551 B1**
(45) Veröffentlichungstag und Bekanntmachung des Hinweises auf die Patenterteilung: **05.04.2017**
(21) Anmeldenummer: 15002318.2
(22) Anmeldetag: 04.08.2015
(51) Int. Cl.: B23K 11/00, B23K 11/36, B21F 23/00, B21F 27/10

(54) **DRAHTGITTER-SCHWEISSMASCHINE**
WIRE GRID WELDING MACHINE
MACHINE À SOUDER POUR GRILLAGE

(30) Priorität: 08.08.2014 AT 6272014
(43) Veröffentlichungstag der Anmeldung: 30.03.2016
(73) Patentinhaber: EVG Entwicklungs- u. Verwertungs- Gesellschaft m.b.H., 8074 Raaba (AT)
(72) Erfinder: Springer, Martin, 8502 Lannach (AT); Resch, Walter, 8510 Stainz (AT)
(74) Vertreter: Fox, Tobias

(56) Entgegenhaltungen:
- EP-A1- 0 241 449
- DE-C1- 3 635 017
- DE-C1- 3 741 372
- DE-C1- 10 122 398

## Beschreibung

Die Erfindung betrifft Drahtgitter-Schweißmaschine mit einer Vorrichtung zum Zuführen der in der Nähe der Schweißposition abgelegten Querdrähte zu einer in der horizontalen Arbeitsebene liegenden Schar der parallelen Längsdrähte des Gitters, siehe z.B. DE 101 22 398 C1. Die Maschine verschweißt die Quer- und die Längsdrähte an ihren Berührungsstellen im Takt des Zuführens der Querdrähte und längsverschiebt die Schar der Längsdrähte in diesem Takt schrittweise in der Produktionsflussrichtung. Die Querdrahtzuführvorrichtung weist eine Mehrzahl paralleler, beabstandet an einem horizontalen Arbeitsbalken befestigter, entlang einer etwa elliptischen Bahn bewegbarer Drahtgreifarme auf, mittels welcher die Querdrähte einzeln nacheinander aus einer Position nahe der Schweißposition abgreifbar und davon seitlich an stets gleich bleibender Stelle zwecks nachfolgenden Verschweißens ablegbar sind.

Bekannt ist hierbei, dass die Horizontalkomponente der Bewegung entlang der elliptischen Bahn erhalten wird mittels des durch eine Antriebswelle über einem Exzenter und eine Schubstange bewegten Gelenkhebelsystems, wobei für die vertikale Komponente dieser Bahn ein eigener Antrieb erforderlich ist, z.B. über eine Nocke, eine Zylinder-Kolbeneinheit oder eine Zuführscheibe. Hierbei ist es weiterhin notwendig, die beiden Antriebe aufeinander zeitlich und räumlich abzustimmen. Daraus resultieren ein apparativer Mehraufwand und eine Einschränkung der Ablaufgeschwindigkeit infolge der nur indirekten Kopplung der verschiedenen Bewegungen.

Die Erfindung zielt darauf ab, die beiden Bewegungen direkt zu koppeln und diese Nachteile zu vermeiden. Dieses Ziel wird erfindungsgemäß bei einer Drahtgitter-Schweißmaschine der eingangs beschriebenen Art dadurch erreicht, dass der die Drahtgreifarme tragende Arbeitsbalken mittels eines von einer fest gelagerten Welle drehbaren Exzenters und einer Schubstange über ein an einem Fixpunkt angelenktes geschlossenes System aneinander angelenkter Hebel horizontal bewegbar ist und auf die Hebel eine Vertikalbewegungseinrichtung zur Festlegung der elliptischen Bahn einwirkt, dass auf einen der Hebel des Gelenkhebelsystems eine weitere Schubstange für die Vertikalbewegung einwirkt, die über einen weiteren Exzenter von derselben Antriebswelle angetrieben ist, und dass an dem System von Hebeln ein vertikales, federnd nachgiebig längenveränderbares Federelement, z.B. in Form eines Pneumatikzylinders, angelenkt ist, welches den Arbeitsbalken nach unten bzw. oben drückt und somit eine zusätzliche, geringfügige Vertikalbewegung des die Drahtgreifarme tragenden Arbeitsbalkens, abhängig vom Durchmesser der Querdrähte, ermöglicht. Die Längen und Lagen der Hebel, der Exzenter und der Schubstangen kann so angepasst werden, dass die gewünschte etwa elliptische Bahn der Querdrähte erreicht wird.

Vorzugsweise greift das Federelement an einem Winkelhebel gelenkig an, dessen einer, etwa horizontaler Arm mit dem Arbeitsbalken fest ist und dessen anderer, etwa vertikaler Arm über einen Lenker am oberen bzw. unteren Ende des Federelementes sowie an einem dem Fixpunkt abgewandten oberen bzw. unteren Gelenkpunkt des geschlossenen Systems der aneinander angelenkten Hebel angreift; dabei ist ein weiterer Lenker mit dem Winkelhebel und mit dem das Hebelsystem abseits vom Fixpunkt schließenden Hebel gelenkig verbunden, welcher gemeinsam mit den Lenkern und dem etwa vertikalen Arm des Winkelhebels ein gelenksverbundenes Parallelogramm bildet. Damit ist sichergestellt, dass das Federelement in der vertikalen Stellung unabhängig von der Bewegung der Hebel verbleibt.

Die Drahtgreifarme weisen vorzugsweise an ihrer Spitze eine V-Nut zum Positionieren des Querdrahtes auf. Die Längsdrähte bilden vorzugsweise einen Gegenhalt beim Abgreifen und Transportieren des in der V-Nut befindlichen Querdrahtes entlang der Hälfte der etwa elliptischen Bahn. Irgendwelche Mittel anderer Art zum Festhalten des Querdrahtes beim Transport und an den Schweißstellen sind somit nicht erforderlich.

Die Querdrahtzuführvorrichtung ist so konzipiert, dass sie wahlweise oberhalb oder unterhalb der Arbeitsebene der Schweißmaschine angeordnet werden kann, gleich wo sich der Einschusskanal für die Querdrähte befindet. In einem Fall sind die Querdrähte mittels der Drahtgreifarme von oben und im anderen Fall von unten auf die in der horizontalen Arbeitsebene liegende Schar paralleler Längsdrähte ablegbar.

Zum Herstellen von Drahtgittern mit doppelten Querdrähten sind die erfindungsgemäß vorgesehenen Vorrichtungen zum Zuführen der Querdrähte zu der in der horizontalen Arbeitsebene liegenden Schar der Längsdrähte des Gitters jeweils spiegelgleich unterhalb und oberhalb der Arbeitsebene angeordnet.

Weitere vorteilhafte Merkmale der erfindungsgemäßen Drahtgitter-Schweißmaschine finden sich in den abhängigen Ansprüchen.

Die Erfindung wird anhand von in der Zeichnung schematisch dargestellten Ausführungsformen einer erfindungsgemäßen Schweißmaschine näher erläutert. Darin zeigt Fig. 1 eine Gitterschweißmaschine mit einer Vorrichtung zum Zuführen der Querdrähte von oben auf eine Schar in einer horizontalen Arbeitsebene liegender paralleler Längsdrähte in einer Seitenansicht in Richtung der Querdrähte, Fig. 2 eine Gitterschweißmaschine mit einer Vorrichtung zum Zuführen der Querdrähte von unten auf die Schar der Längsdrähte in derselben Ansicht, und Fig. 3 eine Gitterschweißmaschine in derselben Ansicht mit zwei Vorrichtungen zum Zuführen der Querdrähte, wobei die eine Vorrichtung die Querdrähte von oben und die andere Vorrichtung die Querdrähte von unten auf die Schar der Längsdrähte zuführt.

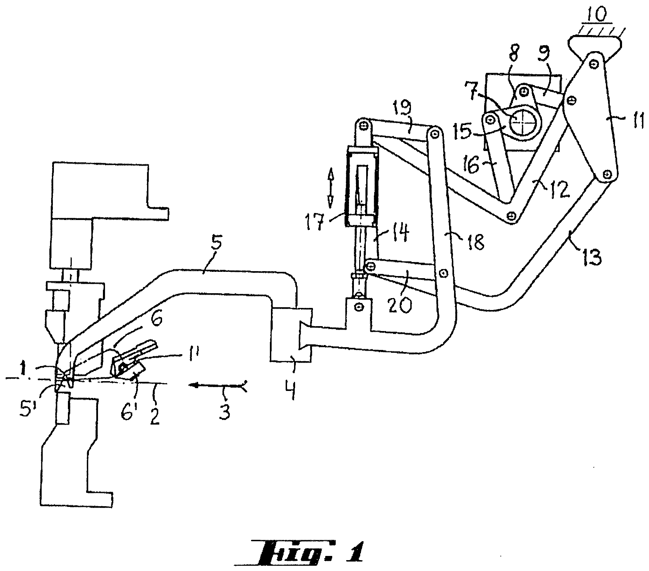

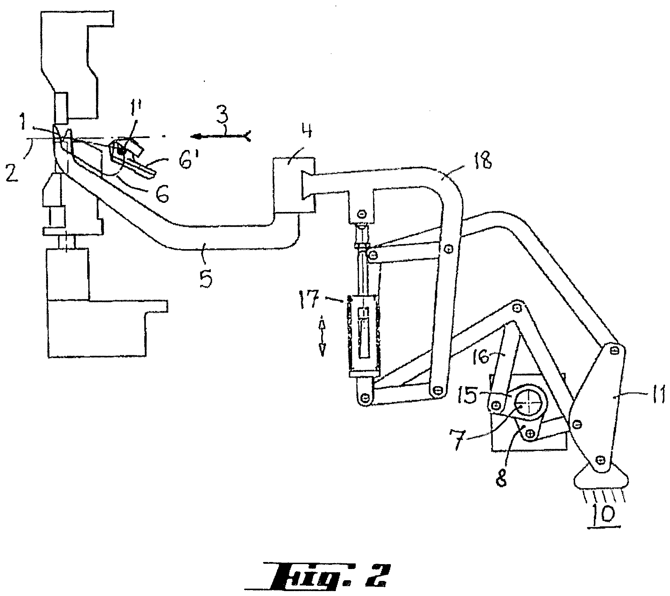

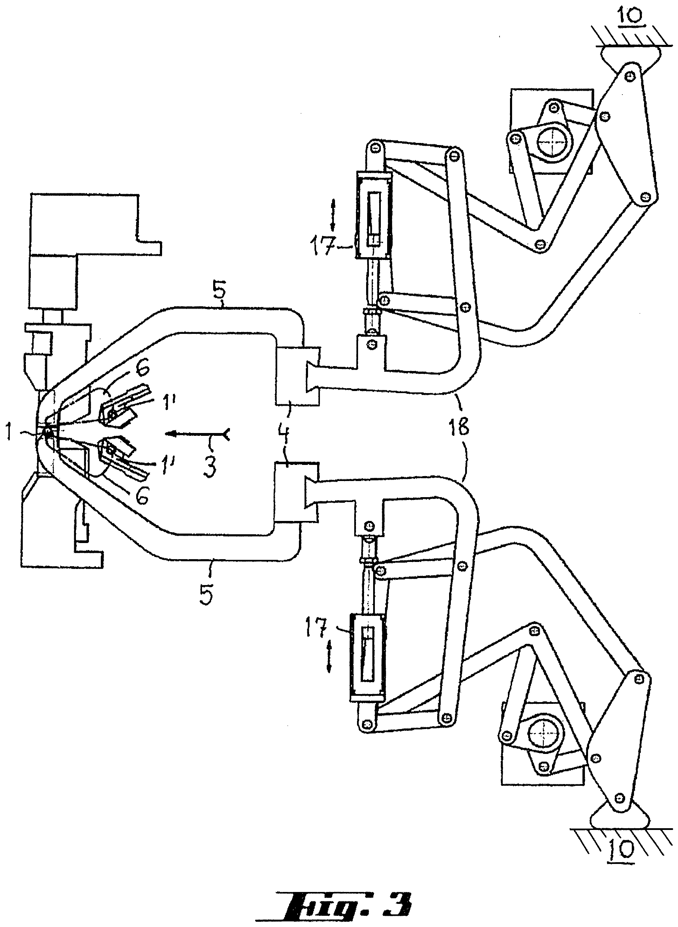

In den Fig. 1-3 sind analoge Bauteile mit denselben Bezugszeichen bezeichnet. In den Fig. 2 und 3 sind die Bezugszeichen zur Vermeidung von Weitläufigkeiten teilweise weggelassen.

In allen Figuren befindet sich ein Querdraht 1 in einer Schweißposition auf bzw. unter einer Schar paralleler, in einer horizontalen Arbeitsebene 2 angeordneter Längsdrähte, die sich nebeneinander in der Produktionsflussrichtung 3 erstrecken und in dieser Richtung 3 schrittweise im Takt des Zuführens und nachfolgenden Anschweißens der Querdrähte 1 an den Berührungsstellen mit den Längsdrähten längsverschoben werden. Die Längsachsen der Querdrähte 1 weisen in die Blattebene der Fig. 1-3 hinein, so dass sie nur in ihrem Querschnitt dargestellt sind. Die Längsdrähte sind zur besseren Übersichtlichkeit nicht dargestellt. Der in den Figuren links angedeutete Unterteil und der dort angedeutete Oberteil der Schweißmaschine sind für die Erfindung nicht wesentlich und nicht bezeichnet.

Die Querdrahtzuführeinrichtung weist eine Mehrzahl beabstandet an einem Arbeitsbalken 4 befestigter paralleler Drahtgreifarme 5 auf, welche die Querdrähte 1 einzeln nacheinander aus einer mit 1' bezeichneten Position nahe der Schweißposition des jeweiligen Querdrahtes 1 abgreifen und seitlich davon in der Position des nachfolgenden Schweißens ablegen. In die mit 1' bezeichnete Position sind die Querdrähte 1 mittels einer Einschießeinrichtung gelangt, die nicht Gegenstand der Erfindung und bei 6' angedeutet ist. Auf dem Weg aus der Position 1' bis in die Schweißposition folgt jeder Querdraht 1 der in Fig. 1 unteren (in Fig. 2 oberen) Hälfte einer etwa elliptischen Bahn 6, worauf die Spitze der Drahtgreifarme 5 die Arbeitsebene 2 entlang der oberen Hälfte der etwa elliptischen Bahn 6 wieder verlässt, um den nächsten in der Position 1' eingegangenen Querdraht 1 abzugreifen. Die Drahtgreifarme 5 weisen an ihrer Spitze eine V-Nut 5' zum Positionieren des Querdrahtes 1 auf, wobei in den vorliegenden Ausführungsbeispielen die Längsdrähte den Gegenhalt beim Abgreifen und beim Transport des Querdrahtes 1 entlang der Hälfte der Bahn 6 darstellen.

Der die Drahtgreifarme 5 tragende Arbeitsbalken 4 ist mittels eines von einer fest gelagerten Antriebswelle 7 drehbaren Exzenters 8 und einer Schubstange 9 über ein an einem Fixpunkt 10 angelenktes geschlossenes System aneinander angelenkter Hebel 11-14 horizontal bewegbar. Auf einen 12 der Hebel 11-14 wirkt eine daran angelenkte weitere Schubstange 16 ein, die über einen weiteren Exzenter 15 von derselben Antriebswelle 7 angetrieben ist und für die vertikale Bewegungskomponente entlang der etwa elliptischen Bahn 6 sorgt. Das geschlossene System aneinander angelenkter Hebel 11-14 für die Horizontalbewegung besteht aus drei aneinander anschließenden Winkelhebeln 11-13 und einem das Hebelsystem 11-14 schließenden Hebel 14, der an den dem mittleren Winkelhebel 11 abgewandten Enden der beiden äußeren Winkelhebel 12, 13 angelenkt ist. Die Schubstange 16 ist an der abgewinkelten Stelle eines 12 der als Winkelhebel ausgebildeten Hebel 11-13 angelenkt.

Der Arbeitsbalken 4, an dem eine Vielzahl der parallelen Drahtgreifarme 5 befestigt ist, ist von einem vertikalen, nachgiebig längenveränderlichen Federelement 17 in Fig. 1 nach unten, in Fig. 2 nach oben drückbar, welches eine geringfügige Vertikalbewegung des Arbeitsbalkens 4 und des an der Spitze der Drahtgreifarme 5 in den V-Nuten 5' gehaltenen Querdrahtes 1, abhängig von dessen Durchmesser, ermöglicht. In Fig. 3 drückt das jeweilige Federelement den oberen Arbeitsbalken 4 nach unten bzw. den unteren Arbeitsbalken 4 nach oben. Das Federelement 17 ist an dem System von Hebeln 11-14 so angelenkt, dass es in der vertikalen Stellung unabhängig von der Bewegung der Hebel 11-14 verbleibt. Das Federelement 17 greift an einem horizontalen Arm eines Winkelhebels 18 gelenkig an, der mit dem Arbeitsbalken 4 fest ist. Der andere, etwa vertikale Arm des Winkelhebels 18 greift mit seinem oberen bzw. unteren Ende über einen Lenker 19 am gemeinsamen Gelenkpunkt an, der am oberen bzw. unteren Ende des Federelementes 17 gemeinsam mit dem oberen bzw. unteren Gelenkpunkt des geschlossenen Systems der aneinander angelenkten Hebel 11-14 ausgebildet ist, welcher Gelenkpunkt dem Fixpunkt 10 abgewandt ist und zwischen den Hebeln 12 und 14 gebildet ist. Ein weiterer Lenker 20 verbindet den Hebel 18 mit dem Hebel 14, welcher das Hebelsystem 11-14 abseits vom Fixpunkt 10 schließt. Der Hebel 14 bildet gemeinsam mit den Lenkern 19, 20 und dem etwa vertikalen Arm des Winkelhebels 18 ein gelenksverbundenes Parallelogramm.

Das längenveränderliche Federelement 17 ist im dargestellten Beispiel ein Pneumatikzylinder, kann aber auch als Druckfeder ausgebildet sein, die den engen Kontakt zwischen den jeweiligen Querdrähten 1 und den Längsdrähten beim Verschweißen unabhängig von den Drahtdurchmessern gewährleistet.

## Patentansprüche

1. Drahtgitter-Schweißmaschine mit einer Vorrichtung zum Zuführen der in der Nähe der Schweißposition abgelegten Querdrähte (1) zu einer in der horizontalen Arbeitsebene (2) liegenden Schar der parallelen Längsdrähte des Gitters, wobei die Querdrähte (1) und die Längsdrähte an ihren Berührungsstellen im Takt des Zuführens der Querdrähte (1) verschweißt werden und die Schar der Längsdrähte in diesem Takt schrittweise in der Produktionsflussrichtung (3) längsverschoben wird, wobei die Querdrahtzuführvorrichtung eine Mehrzahl paralleler, beabstandet an einem horizontalen Arbeitsbalken (4) befestigter, entlang einer etwa elliptischen Bahn (6) bewegbarer Drahtgreifarme (5) aufweist, mittels welcher die Querdrähte (1) einzeln nacheinander aus einer Position (1') nahe der Schweißposition abgreifbar und davon seitlich an stets gleich bleibender Stelle zwecks nachfolgenden Verschweißens ablegbar sind, **dadurch gekennzeichnet, dass** der die Drahtgreifarme (5) tragende Arbeitsbalken (4) mittels eines von einer fest gelagerten Welle (7) drehbaren Exzenters (8) und einer Schubstange (9) über ein an einem Fixpunkt (10) angelenktes geschlossenes System aneinander angelenkter Hebel (11-14) horizontal bewegbar ist und auf die Hebel (11-14) eine Vertikalbewegungseinrichtung zur Festlegung der elliptischen Bahn (6) einwirkt, dass auf einen (12) der Hebel (11-14) eine weitere Schubstange (16) für die Vertikalbewegung einwirkt, die über einen weiteren Exzenter (15) von derselben Antriebswelle (7) angetrieben ist, und dass an dem System von Hebeln (11-14) ein vertikales, federnd nachgiebig längenveränderbares Federelement (17), z.B. in Form eines Pneumatikzylinders, angelenkt ist, welches den Arbeitsbalken (4) nach unten bzw. oben drückt und somit eine zusätzliche, geringfügige Vertikalbewegung des die Drahtgreifarme (5) tragenden Arbeitsbalkens (4) abhängig vom Durchmesser der Querdrähte (1) ermöglicht.

2. Schweißmaschine nach Anspruch 1, **dadurch gekennzeichnet, dass** das Federelement (17) an einem Winkelhebel (18) gelenkig angreift, dessen einer, etwa horizontaler Arm mit dem Arbeitsbalken (4) fest ist und dessen anderer, etwa vertikaler Arm über einen Lenker (19) am oberen bzw. unteren Ende des Federelementes (17) sowie an einer dem Fixpunkt (10) abgewandten oberen bzw. unteren Gelenkpunkt (zwischen den Hebeln 12 und 14) des geschlossenen Systems der aneinander angelenkten Hebel (11-14) angreift, und wobei ein weiterer Lenker (20) den Winkelhebel (18) mit dem das Hebelsystem (11-14) abseits vom Fixpunkt (10) schließenden Hebel (14) gelenkig verbindet, welcher gemeinsam mit den Lenkern (19, 20) und dem etwa vertikalen Arm des Winkelhebels (18) ein gelenksverbundenes Parallelogramm bildet.

3. Schweißmaschine nach Anspruch 1 oder 2, **dadurch gekennzeichnet, dass** das geschlossene System aneinander angelenkter Hebel (11-14) für die Horizontalbewegung aus drei aneinander anschließenden Winkelhebeln (11-13) und einem an den dem mittleren Winkelhebel (11) abgewandten Enden der beiden äußeren Winkelhebel (12, 13) angelenkten Lenker (14) besteht.

4. Schweißmaschine nach einem der Ansprüche 1 bis 3, **dadurch gekennzeichnet, dass** die Schubstange (15) für die Vertikalbewegung an der abgewinkelten Stelle des Winkelhebels (12) angelenkt ist.

5. Schweißmaschine nach einem der Ansprüche 1 bis 4, **dadurch gekennzeichnet, dass** die Drahtgreifarme (5) an ihrer Spitze eine V-Nut (5') zum Positionieren des Querdrahtes (1) aufweisen.

6. Schweißmaschine nach Anspruch 5, **dadurch gekennzeichnet, dass** die Längsdrähte einen Gegenhalt beim Abgreifen und Transportieren des in der V-Nut (5') befindlichen Querdrahtes (1) entlang der Hälfte der etwa elliptischen Bahn (6) bilden.

7. Schweißmaschine nach einem der Ansprüche 1 bis 6, **dadurch gekennzeichnet, dass** die Querdrähte (1) mittels der Drahtgreifarme (5) von oben auf die in der horizontalen Arbeitsebene (2) liegende Schar paralleler Längsdrähte ablegbar sind.

8. Schweißmaschine nach einem der Ansprüche 1 bis 6, **dadurch gekennzeichnet, dass** die Querdrähte (1) mittels der Drahtgreifarme (5) von unten auf die in der horizontalen Arbeitsebene (2) liegende Schar paralleler Längsdrähte ablegbar sind.

9. Schweißmaschine nach einem der Ansprüche 1 bis 6, **dadurch gekennzeichnet, dass** zum Herstellen von Drahtgittern mit doppelten Querdrähten Vorrichtungen zum Zuführen der Querdrähte zu der in der horizontalen Arbeitsebene (2) liegenden Schar der Längsdrähte des Gitters jeweils spiegelgleich unterhalb und oberhalb der Arbeitsebene (2) angeordnet sind.

## Claims

1. Wire-mesh welding machine, having a device for infeeding the transverse wires (1) that are deposited in the proximity of the welding position to a group of the parallel longitudinal wires of the mesh that lie in the horizontal operating plane (2), wherein the transverse wires (1) and the longitudinal wires at their contact points are welded together at the infeeding cycle rate of the transverse wires (1), and the group of the longitudinal wires is longitudinally indexed at this cycle rate in a stepwise manner in the production-flow direction (3), wherein the transverse-wire infeed device has a plurality of parallel wire-gripping arms (5) that are fastened so as to be spaced apart on a horizontal operating beam (4) and are movable along an approximately elliptic path (6) and by means of which (5) the transverse wires (1) from a position (1') proximal to the welding position are individually and sequentially acquirable and, for the purpose of subsequent welding, depositable at a permanent location that is lateral to said position (1'), **characterized in that** the operating beam (4) that supports the wire-gripping arms (5), by means of an eccentric (8) that is rotatable by a fixedly mounted shaft (7) and by means of a push rod (9), is horizontally movable by way of a closed system of mutually articulated levers (11 to 14) that is articulated at a fixed point (10), a vertical-motion installation for establishing the elliptic path (6) acting on the levers (11 to 14),
**in that** a further push rod (16) for the vertical motion, which by way of a further eccentric (15) is driven by the same drive shaft (7), acts on one (12) of the levers (11 to 14), and
**in that** a vertical, resilient, length-adjustable spring element (17), for example in the form of a pneumatic cylinder, which pushes the operating beam (4) upwards or downwards, respectively, and thus, depending on the diameter of the transverse wires (1), enables an additional slight vertical motion of the operating beam (4) that supports the wire-gripping arms (5), is articulated on the system of levers (11 to 14).

2. Welding machine according to Claim 1, **characterized in that** the spring element (17) engages in an articulated manner on a bell-crank lever (18), one approximately horizontal arm thereof being fixed to the operating beam (4), and the other approximately vertical arm thereof by way of a control arm (19) engaging on the upper or lower end, respectively, of the spring element (17) and on an upper or lower articulation point, respectively, (between the levers 12 and 14) of the closed system of mutually articulated levers (11 to 14) that faces away from the fixed point (10), and wherein a further control arm (20) connects the bell-crank lever (18) in an articulated manner to that lever (14), distal to the fixed point (10), that closes the lever system (11 to 14), and that conjointly with the control arms (19, 20) and the approximately vertical arm of the bell-crank lever (18) forms an articulated parallelogram.

3. Welding machine according to Claim 1 or 2, **characterized in that** the closed system of mutually articulated levers (11 to 14) for the horizontal motion is composed of three mutually connected bell-crank levers (11 to 13) and of one control arm (14) that is articulated on those ends of the two external bell-crank levers (12, 13) that face away from the central bell-crank lever (11).

4. Welding machine according to one of Claims 1 to 3, **characterized in that** the push rod (15) for the vertical motion is articulated on the angular location of the bell-crank lever (12).

5. Welding machine according to one of Claims 1 to 4, **characterized in that** the wire-gripping arms (5) at the tips thereof have a V-groove (5') for positioning the transverse wire (1).

6. Welding machine according to Claim 5, **characterized in that** during gripping and transportation of the transverse wire (1) that is located in the V-groove (5') the longitudinal wires form a counter-bearing along half of the approximately elliptic path (6).

7. Welding machine according to one of Claims 1 to 6, **characterized in that** the transverse wires (1) by means of the wire-gripping arms (5) are depositable from above onto the group of parallel longitudinal wires that lie in the horizontal operating plane (2).

8. Welding machine according to one of Claims 1 to 6, **characterized in that** the transverse wires (1) by means of the wire-gripping arms (5) are depositable from below onto the group of parallel longitudinal wires that lie in the horizontal operating plane (2).

9. Welding machine according to one of Claims 1 to 6, **characterized in that**, in order for wire meshes having double transverse wires to be manufactured, devices for infeeding the transverse wires to the group of the longitudinal wires of the mesh that lies in the horizontal operating plane (2) are disposed in a mirror image each below and above the operating plane (2).

## Revendications

1. Machine à souder pour grillage avec un dispositif servant à amener les fils métalliques transversaux (1) déposés à proximité de la position de soudage à un assemblage, situé dans le plan de travail (2) horizontal, des fils métalliques longitudinaux parallèles du grillage, dans laquelle les fils métalliques transversaux (1) et les fils métalliques longitudinaux sont soudés au niveau de leurs points de contact en rythme avec l'amenée des fils métalliques transversaux (1) et l'assemblage des fils métalliques longitudinaux est coulissé longitudinalement dans ce rythme progressivement dans la direction de flux de production (3), dans laquelle le dispositif d'amenée de fils métalliques transversaux présente une multitude de bras de préhension de fil métallique (5) parallèles, fixés à distance au niveau d'une poutre de travail (4) horizontale, pouvant être déplacés le long d'une trajectoire (6) approximativement elliptique, au moyen desquels les fils métalliques transversaux (1) peuvent être sortis par préhension individuellement les uns après les autres hors d'une position (1') à proximité de la position de soudage et, de là, peuvent être déposés de manière latérale au niveau d'un emplacement restant constant aux fins du soudage subséquent, **caractérisée en ce que**
la poutre de travail (4) supportant les bras de préhension de fil métallique (5) peut être déplacée de manière horizontale par l'intermédiaire d'un système fermé, articulé au niveau d'un point fixe (10), de leviers (11 - 14) articulés les uns au niveau des autres au moyen d'une excentrique (8) pouvant être tournée par un arbre (7) monté de manière solidaire et au moyen d'une tige de poussée (9), et un dispositif de déplacement vertical servant à fixer la trajectoire (6) elliptique agit sur les leviers (11 - 14), **en ce qu'**une autre tige de poussée (16) agit, en vue du déplacement vertical, sur l'un (12) des leviers (11 - 14), laquelle est entraînée par le même arbre d'entraînement (7) par l'intermédiaire d'une autre excentrique (15), et **en ce qu'**un élément de ressort (17) vertical à longueur variable de manière élastique et flexible, se présentant par exemple sous la forme d'un vérin pneumatique, est articulé au niveau du système de leviers (11 - 14), lequel pousse la poutre de travail (4) vers le bas ou vers le haut et permet ainsi un déplacement vertical supplémentaire léger de la poutre de travail (4) supportant les bras de préhension de fil métallique (5) en fonction du diamètre des fils métalliques transversaux (1).

2. Machine à souder selon la revendication 1, **caractérisée en ce que** l'élément de ressort (17) s'engage de manière articulée au niveau d'un levier coudé (18), dont un bras à peu près horizontal est solidaire de la poutre de travail (4) et dont l'autre bras approximativement vertical s'engage, par l'intermédiaire d'une bielle (19) au niveau de l'extrémité supérieure ou inférieure de l'élément de ressort (17) ainsi qu'au niveau d'un point d'articulation (entre les leviers (12 et 14)) supérieur ou inférieur, opposé au point fixe (10), du système fermé des leviers (11 - 14) articulés les uns au niveau des autres, et dans laquelle une autre bielle (20) relie de manière articulée le levier coudé (18) au levier (14) fermant le système à leviers (11 - 14) à l'écart du point fixe (10), lequel levier forme, conjointement avec les bielles (19, 20) et avec le bras approximativement vertical du levier coudé (18), un parallélogramme à liaison articulée.

3. Machine à souder selon la revendication 1 ou 2, **caractérisée en ce que** le système fermé de leviers (11 - 14) articulés les uns au niveau des autres est constitué en vue du déplacement horizontal de trois leviers coudés (11 - 13) se raccordant les uns aux autres et d'une bielle (14) articulée au niveau des extrémités, opposées au levier coudé (11) central, des deux leviers coudés (12, 13) extérieurs.

4. Machine à souder selon l'une quelconque des revendications 1 à 3, **caractérisée en ce que** la tige de poussée (15) est articulée, en vue du déplacement vertical, au niveau de l'emplacement plié du levier coudé (12).

5. Machine à souder selon l'une quelconque des revendications 1 à 4, **caractérisée en ce que** les bras de préhension de fil métallique (5) présentent, au niveau de leur pointe, une rainure en V (5') servant à positionner le fil métallique transversal (1).

6. Machine à souder selon la revendication 5, **caractérisée en ce que** les fils métalliques longitudinaux forment un contre-maintien lors de la sortie par préhension et lors du transport du fil métallique transversal (1) se trouvant dans la rainure en V (5') le long de la moitié de la trajectoire (6) approximativement elliptique.

7. Machine à souder selon l'une quelconque des revendications 1 à 6, **caractérisée en ce que** les fils métalliques transversaux (1) peuvent être déposés, au moyen des bras de préhension de fil métallique (5), par le haut sur l'assemblage, situé dans le plan de travail (2) horizontal, de fils métalliques longitudinaux parallèles.

8. Machine à souder selon l'une quelconque des revendications 1 à 6, **caractérisée en ce que** les fils métalliques transversaux (1) peuvent être déposés, au moyen des bras de préhension de fil métallique (5), par le bas sur l'assemblage, situé dans le plan de travail (2) horizontal, de fils métalliques longitudinaux parallèles.

9. Machine à souder selon l'une quelconque des revendications 1 à 6, **caractérisée en ce qu'**afin de fabriquer des grillages de fils métalliques avec des doubles fils métalliques transversaux, des dispositifs servant à amener les fils métalliques transversaux à l'assemblage, situé dans le plan de travail (2) horizontal, des fils métalliques longitudinaux du grillage, sont disposés respectivement de manière symétrique en-dessous ou au-dessus du plan de travail (2).
